(19) Europäisches Patentamt
European Patent Office
Office européen des brevets

(11) EP 4 365 991 A1

# (12) EUROPEAN PATENT APPLICATION

(43) Date of publication:
**08.05.2024 Bulletin 2024/19**

(21) Application number: **23204936.1**

(22) Date of filing: **20.10.2023**

(51) International Patent Classification (IPC):
***H01M 4/525*** *(2010.01)* ***H01M 10/0525*** *(2010.01)*
***H01M 10/0569*** *(2010.01)*

(52) Cooperative Patent Classification (CPC):
**H01M 4/525; H01M 10/0525; H01M 10/0569;**
H01M 2300/0034; H01M 2300/0037; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.11.2022 KR 20220145345**

(71) Applicants:
- **SK On Co., Ltd.**
  **Seoul 03161 (KR)**
- **SK Innovation Co., Ltd.**
  **Seoul 03188 (KR)**

(72) Inventors:
- **KIM, Jong Hwa**
  **34124 Daejeon (KR)**
- **CHO, In Haeng**
  **34124 Daejeon (KR)**
- **YOO, Yeong Bin**
  **34124 Daejeon (KR)**
- **LEE, Ju Wook**
  **34124 Daejeon (KR)**
- **CHOI, Wan Uk**
  **34124 Daejeon (KR)**

(74) Representative: **Bird & Bird LLP**
**Maximiliansplatz 22**
**80333 München (DE)**

## (54) LITHIUM SECONDARY BATTERY

(57) A lithium secondary battery includes a cathode including a cathode active material layer that includes a lithium metal oxide particle having a form of a secondary particle in which a plurality of primary particles are aggregated, an anode facing the cathode, and an electrolyte solution containing a lithium salt and an organic solvent. The organic solvent includes a compound represented by a specific chemical formula. The plurality of primary particles include rod-shape particles having an aspect ratio of 1.5 to 5. The rod-shape particles have a major axis oriented in a direction from a center of the lithium metal oxide particle to a surface of the lithium metal oxide particle.

FIG. 2

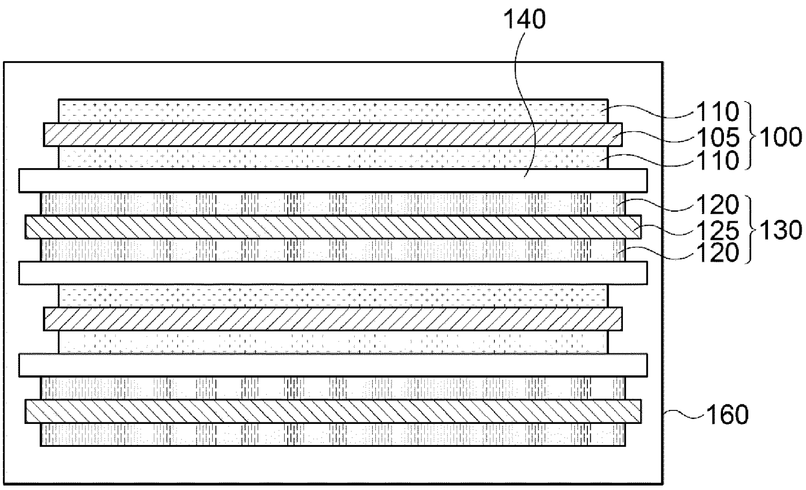


EP 4 365 991 A1

## Description

BACKGROUND

1. Field

The disclosure of this patent document relates to a lithium secondary battery.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile, a hybrid vehicle, etc.

A lithium secondary battery is actively developed and applied due to high operational voltage and energy density per unit weight, a high charging rate, a compact dimension, etc.

For example, the lithium secondary battery may include an electrode assembly including a cathode, an anode and a separation layer interposed between the cathode and the anode, and an electrolyte solution immersing the electrode assembly.

The cathode may include lithium metal oxide particles capable of reversibly intercalating and de-intercalating lithium ions as a cathode active material. For example, the lithium metal oxide particle may have a secondary particle shape in which a plurality of primary particles are agglomerated.

When the battery is repeatedly charged and discharged, cracks may occur an inside of the lithium metal oxide particle in the form of the secondary particle due to repeated intercalation and deintercalation of lithium ions. Further, in the cathode fabrication, cracks may also occur in the lithium metal oxide particles in the form of secondary particle during a pressing of the cathode active material. The cracks may degrade an electrochemical performance of the battery.

SUMMARY

According to an aspect of the present disclosure, there is provided a lithium secondary battery having improved electrochemical performance and operational reliability.

A lithium secondary battery includes a cathode including a cathode active material layer, the cathode active material layer including a lithium metal oxide particle that has a form of a secondary particle in which a plurality of primary particles are aggregated, an anode facing the cathode, and an electrolyte solution containing a lithium salt and an organic solvent. The organic solvent includes a compound represented by Chemical Formula 1.

[Chemical Formula 1]

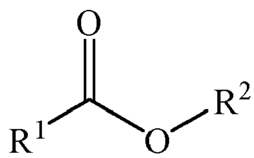

The plurality of primary particles includes rod-shape particles having an aspect ratio of 1.5 to 5, and the rod-shape particles have a major axis oriented in a direction from a center of the lithium metal oxide particle to a surface of the lithium metal oxide particle. In Chemical Formula 1, $R^1$ and $R^2$ are independently a $C_1$-$C_6$ alkyl group substituted with a fluorine atom or a C1-C6 alkyl group unsubstituted with a fluorine atom, and a total number of fluorine atoms in $R^1$ and $R^2$ is 2 or 3.

In some embodiments, the aspect ratio of the rod-shape particles may be from 2.5 to 3.7.

In some embodiments, a content of the lithium metal oxide particles may be in a range from 80 wt% to 99 wt% based on a total weight of the cathode active material layer.

In some embodiments, the lithium metal oxide particle may contain nickel, and a molar fraction of nickel in the lithium metal oxide particle may be 0.8 or more of all elements except for lithium and oxygen.

In some embodiments, the lithium metal oxide particle may further contain manganese and cobalt.

In some embodiments, a ratio of a total area of the rod-shaped particles relative to an area of the lithium metal oxide particle may be 0.8 or more in a cross-sectional image of the lithium metal oxide particle obtained by a scanning

electron microscope,

In some embodiments, the lithium metal oxide particle satisfies Formulae 1 and 2.

[Formula 1]

$$0.61 \leq (D(110))/(D(006)) \leq 0.75$$

[Formula 2]

$$0.61 \leq (D(110))/(D(009)) \leq 0.81$$

In Formulae 1 and 2, D(110) is a crystallite size in a (110) plane direction of the lithium metal oxide particle, D(006) is a crystallite size in a (006) plane direction of the lithium metal oxide particle, and D(009) is a crystallite size in a (009) plane direction of the lithium metal oxide particle.

In some embodiments, $R^1$ may be a $C_1$-$C_3$ alkyl group unsubstituted with a fluorine atom, $R^2$ is a $C_1$-$C_3$ alkyl group substituted with a fluorine atom.

In some embodiments, $R^2$ may be represented by -L-$R^3$, L is a methylene group or an ethylene group, and $R^3$ is $-CHF_2$ or $-CF_3$.

In some embodiments, $R^1$ is a $C_1$-$C_3$ alkyl group unsubstituted with a fluorine atom. $R^2$ may be represented by -L-$R^3$, L is a methylene group or an ethylene group, and $R^3$ is $-CHF_2$.

In some embodiments, the organic solvent may further include a carbonate-based organic solvent.

In some embodiments, a content of the compound represented by Chemical Formula 1 may be in a range from 5 vol% to 40 vol% based on a total volume of the organic solvent.

A lithium secondary battery according to example embodiments may provide improved life-span properties at high temperature and reduced resistance.

## BRIEF DESCRIPTION OF THE DRAWINGS

FIGS. 1 and 2 are a schematic plan view and a schematic cross-sectional view, respectively, illustrating a lithium secondary battery in accordance with example embodiments.

FIGS. 3 and 4 are scanning electron microscope (SEM) images showing cross-sections of the lithium metal oxide particle of Preparation Example 1.

FIGS. 5 and 6 are SEM images of cross-sections of the lithium metal oxide particle of Preparation Example 3.

FIGS. 7 and 8 are SEM images of cross-sections of the lithium metal oxide particle of Preparation Example 4.

## DETAILED DESCRIPTION OF THE EMBODIMENTS

According to embodiments of the present disclosure, a cathode including lithium metal oxide particles having a predetermined morphology is provided. Additionally, a lithium secondary battery including an electrolyte solution that contains a compound represented by Chemical Formula 1 and having improved electrochemical performance and operational reliability is provided.

The term "Ca-Cb" used herein may indicate that the number of carbon atoms is from a to b. The term "5-7 membered ring" may indicate "5 to 7 atoms in the ring."

Hereinafter, a lithium secondary battery according to embodiments of the present disclosure will be described in more detail with reference to experimental examples and accompanying drawings.

FIGS. 1 and 2 are a schematic plan view and a cross-sectional view, respectively, of a lithium secondary battery according to example embodiments. FIG. 2 is a cross-sectional view taken along a line I-I' of FIG. 1.

Referring to FIGS. 1 and 2, a lithium secondary battery may include an electrode assembly 150 and a case 160 accommodating the electrode assembly 150. For example, the electrode assembly 150 may be accommodated in the case 160 together with an electrolyte solution.

The electrode assembly 150 may include a cathode 100 and an anode 130 facing the cathode 100. For example, the electrode assembly 150 may include a plurality of the cathodes and a plurality of the anodes that may be alternately and repeatedly stacked.

The electrolyte solution may include a lithium salt and an organic solvent. The organic solvent may be a non-aqueous organic solvent.

In an embodiment, the electrode assembly 150 may further include a separation layer 140 interposed between the cathode 100 and the anode 130.

For example, the cathode 100 may include a cathode current collector 105 and a cathode active material layer 110 on the cathode current collector 105. For example, the cathode active material layer 110 may be formed on one surface or both sides of the cathode current collector 105.

For example, the cathode current collector 105 may include stainless steel, nickel, aluminum, titanium, copper, or an alloy thereof.

The cathode active material layer 110 may include a cathode active material capable of reversibly intercalating and de-intercalating lithium ions. For example, the cathode active material may include lithium metal oxide particles.

In an embodiment, the lithium metal oxide particle may contain nickel. In some embodiments, the lithium metal oxide particle may further contain manganese and/or cobalt.

In some embodiments, a mole fraction of nickel in the lithium metal oxide particle may be 0.8 or more, 0.85 or more, or 0.9 or more among all elements except lithium and oxygen. As the mole fraction of nickel increases, a capacity of the battery increases, but life-span properties may be deteriorated. However, according to example embodiments of the present disclosure, a morphology of the lithium metal oxide particle may be adjusted and an electrolyte solution including a compound represented by Chemical Formula 1 may be used to improve the life-span properties of the battery.

In some embodiments, the lithium metal oxide particle may include a chemical structure or a crystal structure (layered structure) to be represented by General Formula 1 below.

[General Formula 1] $Li_xNi_{(1-a-b)}M1_aM2_bO_y$

In General Formula 1, M1 and M2 may independently include at least one of Co, Mn, Al, Zr, Ti, Cr, B, Mn, Ba, Si, Y, W and Sr, $0.9 \leq x \leq 1.2$, $1.9 \leq y \leq 2.1$, and $0 \leq a+b \leq 0.2$.

In some embodiments, $0 < a+b \leq 0.15$, or $0 < a+b \leq 0.1$.

In example embodiments, the lithium metal oxide particles include a lithium metal oxide particle having a form of a secondary particle in which a plurality of primary particles are aggregated (hereinafter, may be abbreviated as secondary particle).

In an embodiment, the secondary particle may be formed by an aggregation of more than 10, 30 or more, 50 or more, or 100 or more primary particles.

In some embodiments, the secondary particle may have a particle diameter ($D_{50}$) ranging from 5 μm to 20 μm, from 7 μm to 19 μm, or from 9 μm to 18 μm. For example, the particle diameter $D_{50}$ may refer to a particle diameter at a 50% point of a volume-based particle diameter distribution, and may be measured using a laser diffraction method.

In example embodiments, the plurality of the primary particles include a rod-shape particle which have an aspect ratio (a major axis/a short axis) from 1.5 to 5, and a major axis oriented in a direction from a central portion of the secondary particle to a surface of the secondary particle (e.g., a radial direction).

For example, the central portion of the secondary particle may refer to a region having a predetermined thickness (e.g., from 0.1 μm to 1 μm) from a center of the secondary particle.

For example, the aspect ratio may be measured from an image obtained by observing a cross-section of the secondary particle (e.g., a cross-section passing through the center of the secondary particle) with a scanning electron microscope (SEM).

In some embodiments, in the SEM image of the cross-section of the secondary particles, a ratio of a total area of the rod-shape particles to an area of the secondary particle may be 0.8 or more, 0.85 or more, or 0.9 or more. In some embodiments, the area ratio may be 0.98 or less, or 0.95 or less.

In some embodiments, a length of a major axis of the rod-shape particle may be in a range from 0.4 μm to 2 μm.

In some embodiments, the major axis of the rod-shape particle may be oriented along a lithium diffusion path. For example, the major axis of the rod-shape particle and the lithium diffusion path may be substantially parallel to each other. Alternatively, an acute angle formed between the major axis of the rod-shaped particle and the lithium diffusion path may be greater than 0° and less than or equal to 30°. Accordingly, a power performance of the battery may be further improved.

A battery using the secondary particles including the rod-shape particles may have less crack formation within an inside of the secondary battery during charge/discharge than that in a battery using normal secondary particles (e.g., secondary particles including primary particles having an aspect ratio of less than 1.5). Accordingly, the battery using the secondary particles including the rod-shape particles may have improved life-span properties. For example, the secondary particles including the rod-shape particles may be used, so that reduction of the battery capacity due to repeated charging and discharging may be suppressed.

However, as charging and discharging are repeated for a long period (e.g., 300 cycles or more), the life-span properties of the battery may rapidly decrease even when the secondary particles including the rod-shaped particles

are used. Particularly, the life-span properties of the battery may be further deteriorated at high temperature. After the long period of charging and discharging (e.g., after the significant generation of cracks in the secondary particles), the rod-shape particles rather may increase the penetration of the electrolyte into the secondary particles to accelerate side reactions, thereby deteriorating the life-span properties of the battery.

In some embodiments, the lithium metal oxide particle may satisfy Formulas 1 and 2 below.

[Formula 1]

$$0.61 \leq (D(110))/(D(006)) \leq 0.75$$

[Formula 2]

$$0.61 \leq (D(110))/(D(009)) \leq 0.81$$

In Formulas 1 and 2, D(110) is a crystallite size of the lithium metal oxide particle in a (110) plane direction, D(006) is a crystallite size of the lithium metal oxide particle in a (006) plane direction, and D(009) is a crystallite size of the lithium metal oxide particle in a (009) plane direction.

For example, the "crystallite size" may be measured through an X-ray diffraction (XRD) analysis. The crystallite size may be calculated through a Scherrer equation (Formula 3 below) using a full width at half maximum (FWHM) obtained through the XRD analysis.

[Formula 3]

$$L = \frac{0.9\lambda}{\beta cos\theta}$$

In Formula 3 above, L represents the crystallite size (nm), $\lambda$ represents an X-ray wavelength (nm), $\beta$ represents a full width at half maximum (FWHM) (rad, which means radian) of a peak, and $\theta$ represents a diffraction angle (rad). In example embodiments, the FWHM in the XRD analysis for measuring the crystallite size may be measured from each peak of (110), (006) and (009) planes of the lithium metal oxide particle.

In some embodiments, in Formula 3 above, $\beta$ may represent a FWHM obtained by correcting a value derived from an equipment. In an embodiment, Si may be used as a standard material for reflecting the equipment-derived value. In this case, the device-derived FWHM may be expressed as a function of $2\theta$ by fitting a FWHM profile in an entire $2\theta$ range of Si. Thereafter, a value obtained by subtracting and correcting the equipment-derived FWHM value at the corresponding $2\theta$ from the function may be used as $\beta$.

For example, D(110) may be a value representing the crystallite size in a-axis and b-axis directions, and D(006) and D(009) may be values representing the crystallite size in a c-axis direction.

The lithium metal oxide particles may satisfy Formulas 1 and 2 above, and the aspect ratio of the primary particles may be appropriately adjusted to reduce an internal resistance of the lithium secondary battery and to improve the life-span properties.

According to embodiments of the present disclosure, an electrolyte solution containing an organic solvent containing a compound represented by Chemical Formula 1 may be used together with the secondary particles including the rod-shaped particles. Accordingly, the battery may have improved life-span properties even during long-term charging and discharging at high temperature.

[Chemical Formula 1]

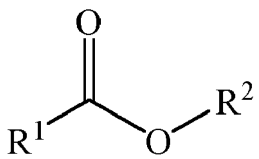

In Chemical Formula 1, $R^1$ and $R^2$ may be independently a $C_1$-$C_6$ alkyl group substituted with a fluorine atom

or a $C_1$-$C_6$ alkyl group unsubstituted with a fluorine atom. A total number of fluorine atoms in $R^1$ and $R^2$ may be 2 or 3.

If the total number of fluorine atoms in $R^1$ and $R^2$ is 0 or 1, a side reaction of the secondary particles including the rod-shape particles may be easily caused, and high-temperature life-span properties of the battery may be degraded. If the total number of fluorine atoms in $R^1$ and $R^2$ is 4 or more, a conductivity of lithium ions in a specific region around an interface between the cathode active material layer 110 and the electrolyte solution may be rapidly decreased. Accordingly, an inner resistance of the battery may be increased.

If the aspect ratio of the rod-shape particles is less than 1.5 or greater than 5, the high-temperature life-span properties of the battery may not be sufficiently improved even when the electrolyte solution containing the compound represented by Chemical Formula 1 is used.

In some embodiments, the aspect ratio may be in a range from 2.5 to 3.7.

In an embodiment, the number of fluorine atoms in $R^1$ and $R^2$ may be two.

In some embodiments, $R^1$ may be a $C_1$-$C_6$ alkyl group unsubstituted with a fluorine atom, and $R^2$ may be a $C_1$-$C_6$ alkyl group substituted with a fluorine atom.

In some embodiments, $R^1$ may be a $C_1$-$C_3$ alkyl group unsubstituted with a fluorine atom, and $R^2$ may be a $C_1$-$C_3$ alkyl group substituted with a fluorine atom.

In some embodiments, the fluorine atom may be bonded to a terminal carbon atom of $R^2$. In some embodiments, the fluorine atom may be bonded only to the terminal carbon atom of $R^2$. In this case, the life-span properties of the battery may be further improved and the internal resistance of the battery may be further reduced.

In some embodiments, $R^2$ may be represented by -L-$R^3$, and L may be a $C_1$-$C_5$ alkylene group. $R^3$ may be $-CHF_2$ or $-CF_3$.

In some embodiments, L may be a methylene group or an ethylene group.

In some embodiments, $R^3$ may be $-CHF_2$. In this case, the life-span properties of the battery may be further improved and the internal resistance of the battery may be further reduced.

In an embodiment, the cathode active material layer 110 may further include a binder and/or a conductive material.

In some embodiments, the binder may include an organic based binder such as polyvinylidenefluoride (PVDF), a polyvinylidene fluoride-hexafluoropropylene copolymer (PVDF-co-HFP), polyacrylonitrile, polymethylmethacrylate, etc., or an aqueous based binder such as styrene-butadiene rubber (SBR) that may be used with a thickener such as carboxymethyl cellulose (CMC).

In some embodiments, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

In some embodiments, a content of the secondary particles including rod-shape particles may be 80 wt% or more, 85 wt% or more, 90 wt% or more, or 95 wt% or more based on a total weight of the cathode active material layer 110.

In some embodiments, the content of the secondary particles including the rod-shape particles may be 99 wt% or less, or 98 wt% or less based on the total weight of the cathode active material layer 110.

For example, the anode active material layer 120 may include an anode active material, the binder, and the conductive material.

For example, an anode current collector 125 may include gold, stainless steel, nickel, aluminum, titanium, copper, or an alloy thereof.

In an embodiment, the anode active material may include a material capable of intercalating and de-intercalating lithium ions. For example, the anode active material may include a lithium alloy, a carbon-based active material, a silicon-based active material, etc.

For example, the lithium alloy may further include an element such as aluminum, zinc, bismuth, cadmium, antimony, silicon, lead, tin, gallium, indium, etc.

For example, the carbon-based active material may include a crystalline carbon, an amorphous carbon, a carbon complex, a carbon fiber, etc.

The amorphous carbon may include, e.g., a hard carbon, cokes, a mesocarbon microbead (MCMB), a mesophase pitch-based carbon fiber (MPCF), etc.

The crystalline carbon may include, e.g., artificial graphite, natural graphite, graphitized cokes, graphitized MCMB, graphitized MPCF, etc.

The silicon-based active material may include, e.g., Si, $SiO_x$($0<x<2$), Si/C, SiO/C, a Si-metal, etc. In some embodiments, the area of the anode 130 may be greater than the area of the cathode 100.

In some embodiments, the cathode current collector 105 may include a cathode tab 106 protruding from one side of the cathode current collector 105.

For example, the cathode tab 106 may be integral with the cathode current collector 105 or electrically connected to the cathode current collector 105 by welding, etc. The cathode current collector 105 and the cathode lead 107 may be electrically connected through the cathode tab 106.

In some embodiments, the anode current collector 125 may include an anode tab 126 protruding from one side of the anode current collector 125.

For example, the anode tab 126 may be integral with the anode current collector 125 or electrically connected to the anode current collector 125 by welding, etc. The anode current collector 125 and the anode lead 127 may be electrically connected through the anode tab 126.

The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In an embodiment, the organic solvent may further include a carbonate-based solvent, an ether-based solvent, a ketone-based solvent, an alcohol-based solvent, an ester (carboxylate) solvent different from the compound represented by Chemical Formula 1, an aprotic solvent, etc.

In an embodiment, a content of the compound represented by Chemical Formula 1 based on ae total volume of the organic solvent may be in a range from 5 volume percent (vol%) to 40 vol%, from 10 vol% to 40 vol%, or from 15 vol% to 40 vol%. Within this range, the high-temperature life-span properties of the battery may be further improved and the internal resistance of the battery may be further reduced.

In some embodiments, the organic solvent may include the compound represented by Chemical Formula 1 and the carbonate-based solvent.

In some embodiments, the carbonate-based solvent may include a linear carbonate-based solvent and a cyclic carbonate-based solvent.

For example, the linear carbonate-based solvent may include at least one of dimethyl carbonate (DMC), ethyl methyl carbonate (EMC), diethyl carbonate (DEC), methyl propyl carbonate, ethyl propyl carbonate and dipropyl carbonate.

For example, the cyclic carbonate-based solvent may include at least one of ethylene carbonate (EC), propylene carbonate (PC) and butylene carbonate.

In some embodiments, a content of the linear carbonate-based solvent based on a total volume of the organic solvent may be smaller than a content of the cyclic carbonate-based solvent.

For example, a volume ratio of the linear carbonate-based solvent and the cyclic carbonate-based solvent may be from 1:1.1 to 1:2.

In some embodiments, the ether-based solvent may include dibutyl ether, tetraethylene glycol dimethyl ether (TEGDME), diethylene glycol dimethyl ether (DEGDME), dimethoxyethane (dimethoxyethane), tetrahydrofuran (THF), 2-methyltetrahydrofuran, etc.

In some embodiments, the ketone-based solvent may include cyclohexanone, etc.

In some embodiments, the alcohol-based solvent may include ethyl alcohol, isopropyl alcohol, etc.

For example, the ester-based solvent may include methyl acetate (MA), ethyl acetate (EA), n-propyl acetate (n-PA), 1,1-dimethylethyl acetate (DMEA), methyl propionate (MP), ethyl propionate (EP), etc.

For example, the aprotic solvent may include, e.g., a nitrile-based solvent, an amide-based solvent (e.g., dimethylformamide), a dioxolane-based solvent (e.g., 1,3-dioxolane), a sulfolane-based solvent, etc.

The lithium salt may be represented by $Li^+X^-$. For example, the anion $X^-$ may be any one selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P$-, $CF_3SO_3^-$, $CF_3CF_2SO_3^-$, $(CF_3SO_2)_2N$-, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

For example, the lithium salt may be included in a concentration from 0.01M to 5M, or from 0.01M to 2M in the organic solvent.

In an embodiment, the electrolyte solution may further include an additive to further improve an electrochemical performance of the battery. In some embodiments, the additive may include a fluorine (F)-containing cyclic carbonate-based compound, a fluorine (F)-containing lithium phosphate-based compound, a sultone-based compound, a cyclic sulfate-based compound, and the like.

In some embodiments, a content of the additive based on a total weight of the electrolyte solution may be 10 wt% or less, 8 wt% or less, or 6 wt% or less. In some embodiments, the content of the additive based on the total weight of the electrolyte may be 0.01 wt% or more, 0.03 wt% or more, 0.05 wt% or more, 0.1 wt% or more, 0.3 wt% or more, 0.5 wt% or more, or 1 wt% or more.

For example, the fluorine-containing cyclic carbonate-based compound may have a 5 to 7-membered cyclic structure. For example, the fluorine-containing cyclic carbonate-based compound may include a fluorine atom directly bonded to a carbon atom in a ring or an alkyl group (e.g., $-CF_3$) to which a fluorine atom is bonded.

In some embodiments, the fluorine-containing cyclic carbonate compound may include fluoroethylene carbonate, etc.

In some embodiments, the fluorine-containing cyclic carbonate-based compound may be included in an amount

from 0.1 wt% to 5 wt%, from 0.2 wt% to 4 wt%, or from 0.3 wt% to 3 wt% based on the total weight of the electrolyte solution.

For example, the fluorine-containing lithium phosphate-based compound may include a fluorine atom directly bonded to a phosphorus atom or an alkyl group (e.g., - $CF_3$) to which a fluorine atom is bonded.

In some embodiments, the fluorine-containing lithium phosphate-based compound may include lithium difluorophosphate, lithium tetrafluorooxalate phosphate, lithium difluoro(bisoxalato)phosphate, etc.

In some embodiments, the fluorine-containing lithium phosphate-based compound may be included in an amount from 0.1 wt% to 2 wt%, from 0.2 wt% to 1.5 wt%, or from 0.3 wt% to 1 wt% based on the total weight of the electrolyte solution.

For example, the sultone-based compound may have a 5 to 7-membered cyclic structure.

In some embodiments, the sultone-based compound may include 1,3-propane sultone, 1,4-butane sultone, ethene sultone, 1,3-propene sultone, 1,4-butene sultone, 1-methyl-1,3-propene sultone, etc.

In some embodiments, the sultone-based compound may be included in an amount from 0.1 wt% to 2 wt%, from 0.2 wt% to 1.5 wt%, or from 0.3 wt% to 1 wt% based on the total weight of the electrolyte solution.

For example, the cyclic sulfate-based compound may have a 5 to 7-membered cyclic structure.

In some embodiments, the cyclic sulfate-based compound may include ethylene sulfate, trimethylene sulfate, methyltrimethylene sulfate, etc.

In some embodiments, the cyclic sulfate-based compound may be included in an amount from 0.1 wt% to 2 wt%, from 0.2 wt% to 1.5 wt%, or from 0.3 wt% to 1 wt% based on the total weight of the electrolyte solution.

Hereinafter, examples are proposed to more concretely describe the present disclosure.

## Preparation Example 1

A mixed solution was prepared by adding $NiSO_4$, $CoSO_4$ and $MnSO_4$ to distilled water from which dissolved oxygen was removed in a molar ratio of 90:05:05.

The mixed solution, NaOH and $NH_4OH$ were put into a reactor, and a coprecipitation reaction was performed in a range of reaction time from about 24 hours to 72 hours to prepare metal hydroxide particles $Ni_{0.9}Co_{0.05}Mn_{0.05}(OH)_2$.

A mixture was prepared by putting the metal hydroxide particles and lithium hydroxide into a dry high-speed mixer so that the molar ratio was 1:1.03.

The mixture was loaded into a firing furnace. A temperature of the firing furnace was increased to 670 °C at a ramping rate of 2 °C/min, and fired at 670 °C for 10 hours.

During the firing, oxygen gas was passed through the firing furnace at a flow rate of 10 mL/min.

The fired product was naturally cooled to room temperature, and then pulverized and classified to obtain lithium metal oxide particles ($LiNi_{0.9}Co_{0.05}Mn_{0.05}O_2$).

## Preparation Example 2

Lithium metal oxide particles having the form of a secondary particle in which a plurality of primary particles were aggregated were prepared by the same method as that in Preparation Example 1, except that the firing temperature is 700 °C for 10 hours and the molar ratio of the metal hydroxide particles and lithium hydroxide is 1:1.01.

## Preparation Example 3

A mixed solution was prepared by adding $NiSO_4$, $CoSO_4$ and $MnSO_4$ to distilled water from which dissolved oxygen was removed in a molar ratio of 90:05:05.

The mixed solution, NaOH and $NH_4OH$ were put into a reactor, and a coprecipitation reaction was performed in a range of reaction time from about 24 hours to 72 hours to prepare metal hydroxide particles $Ni_{0.9}Co_{0.05}Mn_{0.05}(OH)_2$.

A mixture was prepared by putting the metal hydroxide particles and lithium hydroxide into a dry high-speed mixer so that the molar ratio was 1:1.01.

The mixture was put into a firing furnace. A temperature of the firing furnace was raised to 650 °C at a ramping rate of 2 °C/min, and the mixture was fired at 650 °C for 10 hours.

During the firing, oxygen gas was passed through the firing furnace at a flow rate of 10 mL/min.

The fired product was naturally cooled to room temperature, and then pulverized and classified to obtain lithium metal oxide particles ($LiNi_{0.9}Co_{0.05}Mn_{0.05}O_2$).

## Preparation Example 4

A mixed solution was prepared by adding $NiSO_4$, $CoSO_4$ and $MnSO_4$ to distilled water from which dissolved oxygen was removed in a molar ratio of 90:05:05.

The mixed solution, NaOH and $NH_4OH$ were put into a reactor, and a coprecipitation reaction was performed in a range of reaction time from about 24 hours to 72 hours to prepare metal hydroxide particles $Ni_{0.9}Co_{0.05}Mn_{0.05}(OH)_2$.
A mixture was prepared by putting the metal hydroxide particles and lithium hydroxide into a dry high-speed mixer so that the molar ratio was 1:1.03.
The mixture was put into a firing furnace. A temperature of the firing furnace was raised to 730 °C at a ramping rate of 2 °C/min, and the mixture was fired at 730 °C for 10 hours.
During the firing, oxygen gas was passed through the firing furnace at a flow rate of 10 mL/min.
The fired product was naturally cooled to room temperature, and then pulverized and classified to obtain lithium metal oxide particles ($LiNi_{0.9}Co_{0.05}Mn_{0.05}O_2$).

Examples and Comparative Examples

A cathode slurry was prepared by dispersing the lithium metal oxide particles as shown in Table 2, carbon black, and PVDF in N-methyl-2-pyrrolidone (NMP) in a weight ratio of 93:5:2.
The cathode slurry was coated on an aluminum foil, dried and pressed to prepare a cathode having a cathode active material layer formed thereon. A lithium metal was used as a counter electrode (anode).
The cathode and the anode were notched and stacked in a circular shape having diameters of Φ14 and Φ16, respectively, and an electrode assembly was formed by interposing a separator (Polyethylene (PE), thickness: 13 μm) notched with Φ19 between the cathode and the anode. ΦN (N is a positive number) means a diameter of N mm.
The electrode assembly was accommodated in a coin cell case (2032 standard), and an electrolyte solution was put into the coin cell case to manufacture a lithium secondary battery.
As the electrolyte solution, a 1M LiPF6 solution prepared using an organic solvent having a composition shown in Table 2 below was used.

Evaluation Example 1: Measurement of Aspect Ratio

Cross-sections of the lithium metal oxide particles of Preparation Examples 1 to 4 were observed with a scanning electron microscope (SEM).
In the SEM image, 30 primary particles were randomly selected. The average value was calculated by measuring an aspect ratio (major axis/minor axis) of each of the selected primary particles.
FIGS. 3 and 4 are SEM images showing cross-sections of the lithium metal oxide particle of Preparation Example 1.
FIGS. 5 and 6 are SEM images of cross-sections of the lithium metal oxide particle of Preparation Example 3.
FIGS. 7 and 8 are SEM images of cross-sections of the lithium metal oxide particle of Preparation Example 4.

Evaluation Example 2: XRD (X-ray diffraction) analysis

Samples of 0.05 g to 1.2 g were obtained from the lithium metal oxide particles of Preparation Examples 1 to 4. Crystallite sizes in a (110) plane direction (D (110)), in a (006) plane direction (D(006)) and in a (009) plane direction (D(009)) were calculated using an XRD analysis and the above Formula 3
Calculated D(110), D(006) and D(009) were substituted into Formulae 1 and 2.
Specific XRD analysis equipment and conditions are shown in Table 1 below.

[Table 1]

| XRD(X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.006565° |
| Divergence slit | 1/4° |

(continued)

| XRD(X-Ray Diffractometer) EMPYREAN | |
|---|---|
| Maker | PANalytical |
| Antiscatter slit | 1° |

Evaluation Example 3: Evaluation on area ratio of rod-shape particles

In the images taken with a scanning electron microscope (SEM) of the cross-section of the lithium metal oxide particles prepared according to Examples and Comparative Examples, a ratio of a cross-sectional area of the rod-shape particles (aspect ratio: 1.5 to 5) with respect to the total cross-sectional area of the lithium metal oxide particle was measured and evaluated as an area ratio of the rod-shape particles.

Evaluation Example 4: Evaluation on life-span property at high temperature (45 °C)

The lithium secondary batteries of Examples and Comparative Examples were CC/CV charged (0.5C 4.3V 0.05C CUT-OFF) and CC discharged (0.5C 3.0V CUT-OFF).
The charging and discharging were repeated 200 times, and a discharge capacity C2 at the second cycle and a discharge capacity C200 at the 200th cycle were measured.
A capacity retention was calculated according to the following formula.

$$\text{Capacity retention (\%)} = (C200/C2)\times 100\ (\%)$$

Evaluation Example 5: Evaluation on rate property at room temperature (25 °C)

Rate properties of the lithium secondary batteries of Examples and Comparative Examples were measured according to C-rates under conditions of 25 °C, 4.3V CUT-OFF charging and 3.0V CUT-OFF discharging.
Specifically, the evaluation under the charge/discharge condition of 0.1C was performed twice, and the evaluation was performed once under the charge/discharge condition of 0.5C, and then the evaluation was performed once each of conditions of the 1C, 2C and 4C discharge while maintaining the charge condition of 0.5C.
The discharge capacity at 4C was divided by the discharge capacity at 0.5C to evaluate the rate property as a percentage (%).
The evaluation results are shown in Table 2 below.

[Table 2]

| No. | cathode active material | aspect ratio (primary particle) | XRD | | area ratio (rod-shape particle) | organic solvent | 45°C capacity retention (%) | 25°C rate property (%) |
|---|---|---|---|---|---|---|---|---|
| | | | D(110) /D (006) | D(110) /D (009) | | | | |
| Example 1 | Preparation Example 1 | 2.58 | 0.6593 | 0.6390 | 0.87 | E-1+EC+EMC 3: 4:3(v/v/v) | 96.7 | 89.6 |
| Example 2 | Preparation Example 1 | 2.58 | 0.6593 | 0.6390 | 0.87 | E-2+EC+EMC 3: 4:3(v/v/v) | 94.9 | 84.8 |
| Example 3 | Preparation Example 1 | 2.58 | 0.6593 | 0.6390 | 0.87 | E-3+EC+EMC 3: 4:3(v/v/v) | 94.2 | 85.1 |
| Example 4 | Preparation Example 2 | 1.55 | 0.6152 | 0.6203 | 0.81 | E-1+EC+EMC 3: 4:3(v/v/v) | 94.0 | 87.1 |
| Example 5 | Preparation Example 2 | 3.61 | 0.6915 | 0.7230 | 0.91 | E-1+EC+EMC 3: 4:3(v/v/v) | 97.2 | 90.9 |
| Example 6 | Preparation Example 2 | 4.92 | 0.7485 | 0.8070 | 0.94 | E-1+EC+EMC 3: 4:3(v/v/v) | 92.5 | 89.1 |
| Comparative Example 1 | Preparation Example 1 | 2.58 | 0.6593 | 0.6390 | 0.87 | EC+EMC 4:6(v/v) | 88.1 | 82.6 |
| Comparative Example 2 | Preparation Example 1 | 2.58 | 0.6593 | 0.6390 | 0.87 | E-4+EC+EMC 3: 4:3(v/v/v) | 92.3 | 81.4 |
| Comparative Example 3 | Preparation Example 1 | 2.58 | 0.6593 | 0.6390 | 0.87 | E-5+EC+EMC 3: 4:3(v/v/v) | 91.1 | 75.7 |
| Comparative Example 4 | Preparation Example 3 | 6.51 | 0.9573 | 1.5697 | 0.97 | E-1+EC+EMC 3: 4:3(v/v/v) | 85.9 | 88.1 |
| Comparative Example 5 | Preparation Example 2 | 5.09 | 0.7616 | 0.8219 | 0.94 | E-1+EC+EMC 3: 4:3(v/v/v) | 87.2 | 88.4 |
| Comparative Example 6 | Preparation Example 4 | 1.42 | 0.5470 | 0.3870 | 0.78 | E-1+EC+EMC 3: 4:3(v/v/v) | 77.0 | 86.2 |
| Comparative Example 7 | Preparation Example 1 | 2.58 | 0.6593 | 0.6390 | 0.87 | FEC+EC+EMC 3: 4:3(v/v/v) | 90.3 | 84.1 |

E-1: 2,2-difluoroethyl acetate

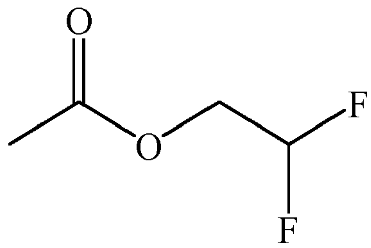

E-2: 2,2,2-trifluoroethyl acetate

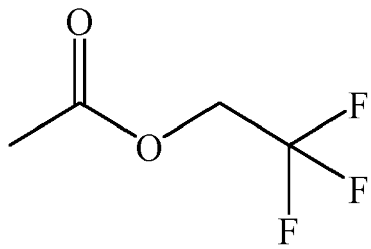

E-3: ethyl 2,2,2-trifluoroacetate

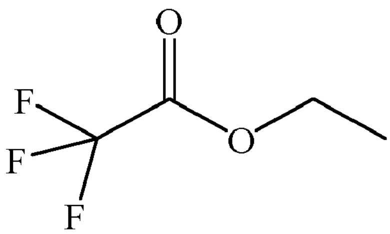

E-4: 1,1,2,2-tetrafluoroethyl acetate

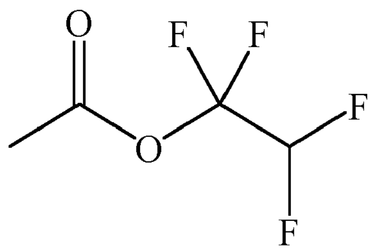

E-5: perfluoroethyl acetate

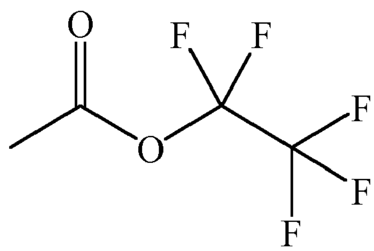

EC: ethylene carbonate
EMC: ethyl methyl carbonate
FEC: fluoroethylene carbonate

In Table 2, (v/v) or (v/v/v) refers to a volume ratio.

Referring to Table 2, the lithium secondary batteries of Examples provided improved life-span properties at high temperature and reduced internal resistance compared to those from the lithium secondary batteries of Comparative Examples.

## Claims

1. A lithium secondary battery, comprising:

   a cathode comprising a cathode active material layer, the cathode active material layer comprising a lithium metal oxide particle that has a form of a secondary particle in which a plurality of primary particles are aggregated;
   an anode facing the cathode; and
   an electrolyte solution containing a lithium salt and an organic solvent, the organic solvent comprising a compound represented by Chemical Formula 1:

   [Chemical Formula 1]

   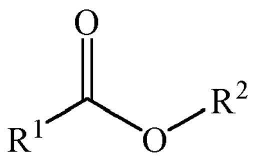

   wherein the plurality of primary particles comprise rod-shape particles having an aspect ratio of 1.5 to 5, and the rod-shape particles have a major axis oriented in a direction from a center of the lithium metal oxide particle to a surface of the lithium metal oxide particle,
   wherein, in Chemical Formula 1, $R^1$ and $R^2$ are independently a $C_1$-$C_6$ alkyl group substituted with a fluorine atom or a $C_1$-$C_6$ alkyl group unsubstituted with a fluorine atom, and a total number of fluorine atoms in $R^1$ and $R^2$ is 2 or 3.

2. The lithium secondary battery according to claim 1, wherein the aspect ratio of the rod-shape particles is from 2.5 to 3.7.

3. The lithium secondary battery according to claim 1 or claim 2, wherein a content of the lithium metal oxide particles is in a range from 80 wt% to 99 wt% based on a total weight of the cathode active material layer.

4. The lithium secondary battery according to any one of claims 1 to 3, wherein the lithium metal oxide particle contains nickel, and a molar fraction of nickel in the lithium metal oxide particle is 0.8 or more of all elements except for lithium and oxygen.

5. The lithium secondary battery according to claim 4, wherein the lithium metal oxide particle further contains manganese and cobalt.

6. The lithium secondary battery according to any one of claims 1 to 5, wherein a ratio of a total area of the rod-shaped particles relative to an area of the lithium metal oxide particle is 0.8 or more in a cross-sectional image of the lithium metal oxide particle obtained by a scanning electron microscope.

7. The lithium secondary battery according to any one of claims 1 to 6, wherein the lithium metal oxide particle satisfies Formulae 1 and 2:

   [Formula 1]

   $$0.61 \leq (D(110))/(D(006)) \leq 0.75$$

[Formula 2]

$$0.61 \leq (D(110))/(D(009)) \leq 0.81$$

wherein, in Formulae 1 and 2, D(110) is a crystallite size in a (110) plane direction of the lithium metal oxide particle, D(006) is a crystallite size in a (006) plane direction of the lithium metal oxide particle, and D(009) is a crystallite size in a (009) plane direction of the lithium metal oxide particle.

**8.** The lithium secondary battery according to any one of claims 1 to 7, wherein $R^1$ is a $C_1$-$C_3$ alkyl group unsubstituted with a fluorine atom,
$R^2$ is a $C_1$-$C_3$ alkyl group substituted with a fluorine atom.

**9.** The lithium secondary battery according to any one of claims 1 to 8, wherein $R^2$ is represented by -L-$R^3$, L is a methylene group or an ethylene group, and $R^3$ is $-CHF_2$ or $-CF_3$.

**10.** The lithium secondary battery according to any one of claims 1 to 9, wherein $R^1$ is a $C_1$-$C_3$ alkyl group unsubstituted with a fluorine atom, and
$R^2$ is represented by -L-$R^3$, L is a methylene group or an ethylene group, and $R^3$ is $-CHF_2$.

**11.** The lithium secondary battery according to any one of claims 1 to 10, wherein the organic solvent further comprises a carbonate-based organic solvent.

**12.** The lithium secondary battery according to any one of claims 1 to 11, wherein a content of the compound represented by Chemical Formula 1 is in a range from 5 vol% to 40 vol% based on a total volume of the organic solvent.

FIG. 1

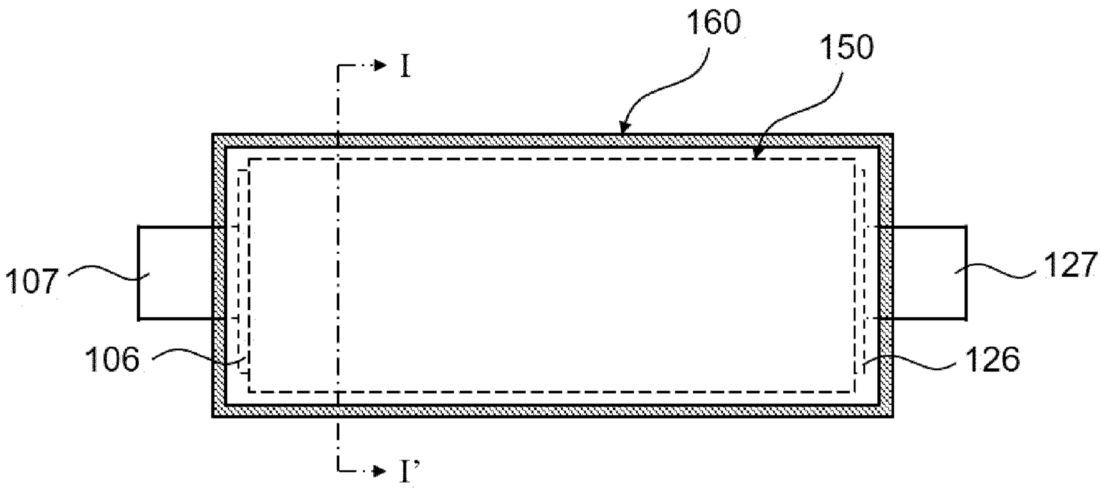
160
150
I
I'
107
106
127
126

FIG. 2

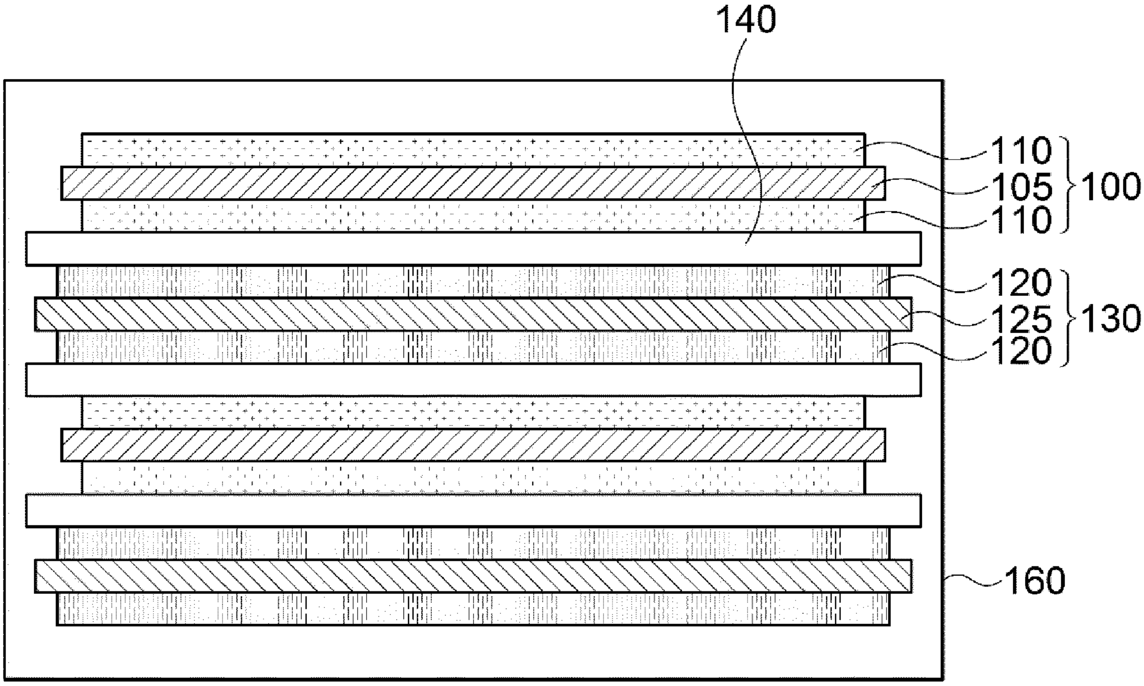
140
110
105
110
100
120
125
120
130
160

FIG. 3

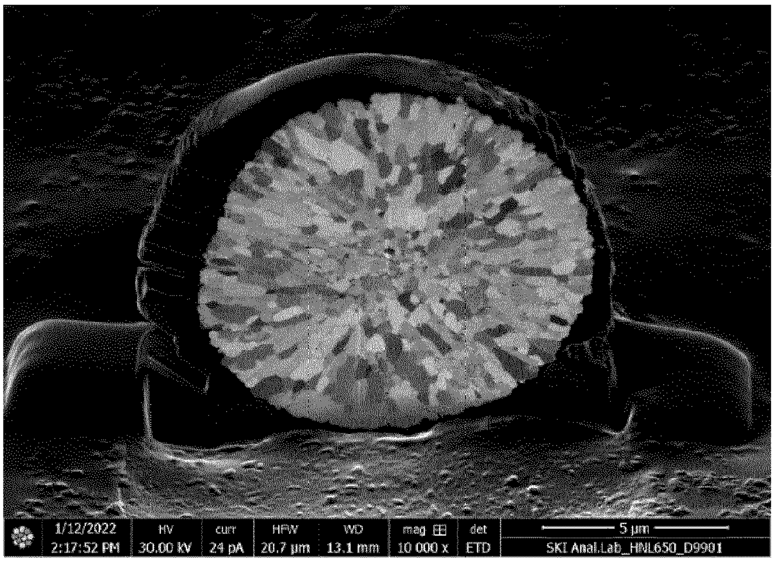
1/12/2022
2:17:52 PM
HV
30.00 kV
curr
24 pA
HFW
20.7 µm
WD
13.1 mm
mag
10 000 x
det
ETD
5 µm
SKI Anal.Lab_HNL650_D9901

FIG. 4

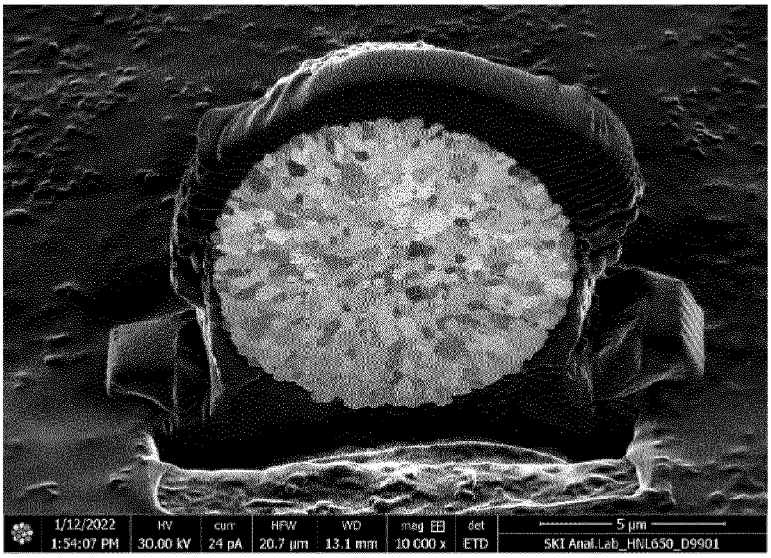
1/12/2022
1:54:07 PM
HV
30.00 kV
curr
24 pA
HFW
20.7 µm
WD
13.1 mm
mag
10 000 x
det
ETD
5 µm
SKI Anal.Lab_HNL650_D9901

FIG. 5

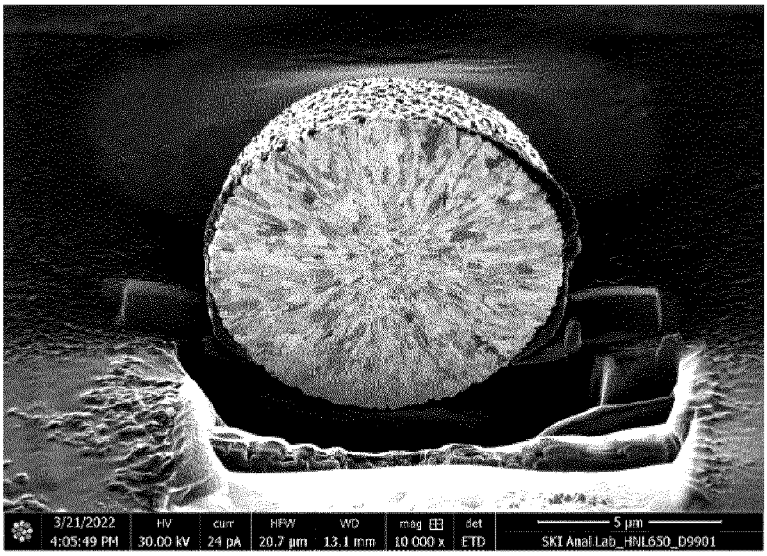
3/21/2022
4:05:49 PM
HV
30.00 kV
curr
24 pA
HFW
20.7 μm
WD
13.1 mm
mag
10 000 x
det
ETD
5 μm
SKI Anal.Lab_HNL650_D9901

FIG. 6

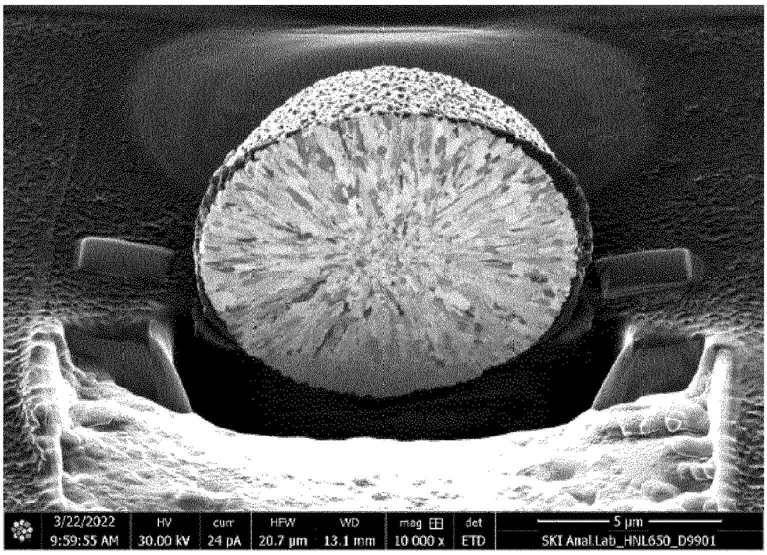
3/22/2022
9:59:55 AM
HV
30.00 kV
curr
24 pA
HFW
20.7 μm
WD
13.1 mm
mag
10 000 x
det
ETD
5 μm
SKI Anal.Lab_HNL650_D9901

FIG. 7

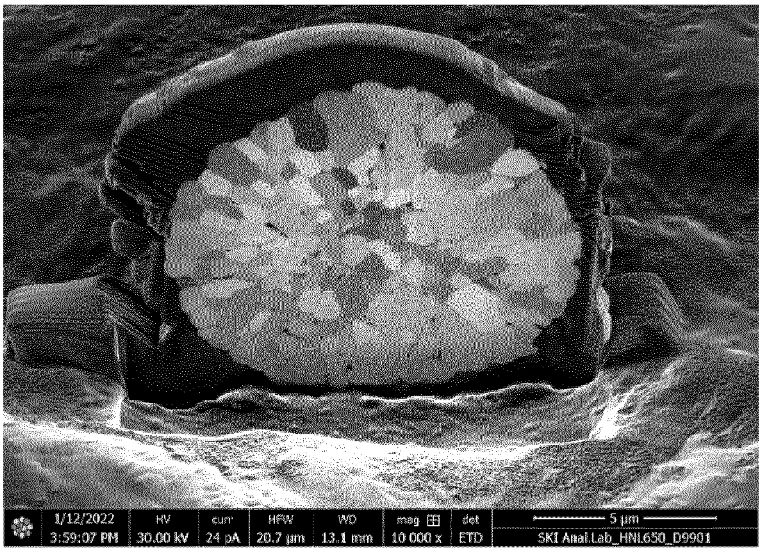
1/12/2022
3:59:07 PM
HV
30.00 kV
curr
24 pA
HFW
20.7 μm
WD
13.1 mm
mag
10 000 x
det
ETD
5 μm
SKI Anal.Lab_HNL650_D9901

FIG. 8

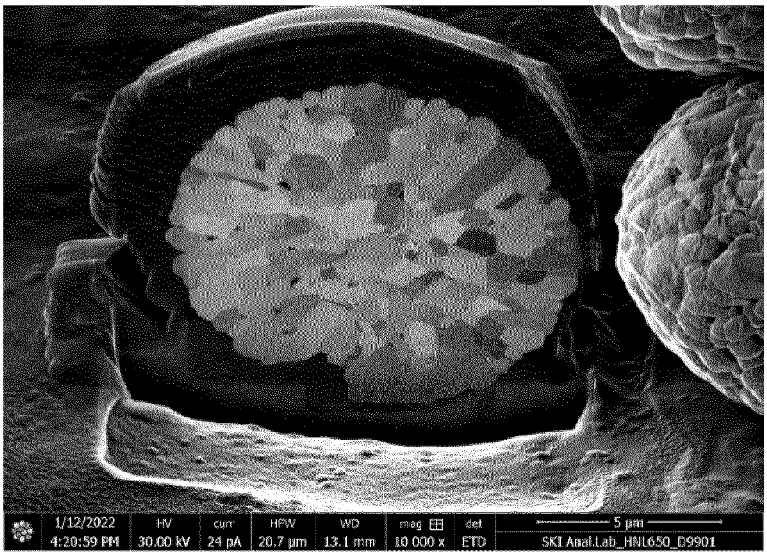
1/12/2022
4:20:59 PM
HV
30.00 kV
curr
24 pA
HFW
20.7 μm
WD
13.1 mm
mag
10 000 x
det
ETD
5 μm
SKI Anal.Lab_HNL650_D9901

Europäisches Patentamt
European Patent Office
Office européen des brevets

# EUROPEAN SEARCH REPORT

Application Number
EP 23 20 4936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/016647 A1 (IUCF HYU [KR]) 5 February 2015 (2015-02-05) * claims 1,15 * ----- | 1-12 | INV. H01M4/525 H01M10/0525 H01M10/0569 |
| A | WO 2017/057588 A1 (UBE INDUSTRIES [JP]) 6 April 2017 (2017-04-06) * paragraph [0058]; claim 3 * ----- | 1-12 | |

TECHNICAL FIELDS SEARCHED (IPC)

H01M

The present search report has been drawn up for all claims

| Place of search | Date of completion of the search | Examiner |
|---|---|---|
| Munich | 21 March 2024 | Steinreiber, J |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 20 4936

This annex lists the patent family members relating to the patent documents cited in the above-mentioned European search report. The members are as contained in the European Patent Office EDP file on
The European Patent Office is in no way liable for these particulars which are merely given for the purpose of information.

21-03-2024

| Patent document cited in search report | Publication date | Patent family member(s) | Publication date |
|---|---|---|---|
| WO 2015016647 A1 | 05-02-2015 | CN 105431382 A | 23-03-2016 |
| | | EP 3028995 A1 | 08-06-2016 |
| | | KR 20150016125 A | 11-02-2015 |
| | | US 2016190573 A1 | 30-06-2016 |
| | | WO 2015016647 A1 | 05-02-2015 |
| WO 2017057588 A1 | 06-04-2017 | CN 108140895 A | 08-06-2018 |
| | | DE 112016004508 T5 | 12-07-2018 |
| | | US 2018277900 A1 | 27-09-2018 |
| | | WO 2017057588 A1 | 06-04-2017 |

EPO FORM P0459

For more details about this annex : see Official Journal of the European Patent Office, No. 12/82